Europäisches Patentamt

European Patent Office

Office européen des brevets

(11) Veröffentlichungsnummer: **0 319 605**

**A1**

(12) **EUROPÄISCHE PATENTANMELDUNG**

(21) Anmeldenummer: **87118214.3**

(22) Anmeldetag: **09.12.87**

(51) Int. Cl.4: **E04F 13/08 , E04F 15/08**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **ASCO TRUST**
**Lettstrasse 37**
**FL-9490 Vaduz(LI)**

(72) Erfinder: **Winkel, Heinz**
**Nordring 182**
**D-8500 Nuernberg 10(DE)**
Erfinder: **Ripplinger,Erwin**
**Auf der Heide 26-28**
**D-6643 Perl-Bueschdorf(DE)**

(74) Vertreter: **Göbel, Matthias, Dipl.-Ing.**
**Pruppacher Hauptstrasse 5-7**
**D-8501 Pyrbaum-Pruppach(DE)**

(54) Verfahren zum Herstellen von Wand- und Bodenbelagtafeln.

(57) Bei einem Verfahren zum Herstellen von Wand- und Bodenbelagtafeln mit einer Anzahl durch erhärteten oder polymerisierten Fugenwerkstoff verbundenen Fliesen (3) werden zur Schaffung einfacher und sicherer Verfahrensschritte die Fliesen (3) mit der Vorderseite mit Fugenabstand (5) auf einen mit einer flexiblen oder elastischen Auflage (2) übergriffenen ebenen Formunterteil (1) frei aufgelegt und durch einen Formrahmen (6) mit halber Fugenbreite umfaßt. Weiter werden an den Rückseiten der Fliesen und dem Formrahmen ein Formoberteil (8) angelegt und fixiert und nachfolgend über eine im Formoberteil ausgebildete Einfüllöffnung (9) Fugenwerkstoff in die leeren Fugen zwischen den Fliesen (3) sowie den Fliesen und den Formrahmen (6) eingebracht und nach Zurückschwenken des Formoberteils (8) und Erhärtung oder Polymerisierung des Fugenwerkstoffs wird die Fliesentafel vom Formunterteil (1) und den Formrahmen (6) abgehoben.

Fig.1

## Verfahren zum Herstellen von Wand- und Bodenbelagtafeln

Die Erfindung betrifft ein Verfahren zum Herstellen von Wand- und Bodenbelagtafeln mit einer Anzahl durch erhärteten oder polymerisierten Fugenwerkstoff zu einer einstückigen Einheit verbundenen Fliesen.

Nach einem bekannten Verfahren (DE-OS 2 519 284) werden die Fliesen mit der Vorderseite nach oben auf Nocken eines eine Einfüllöffnung aufweisenden ersten Formteils ausgerichtet aufgelegt und durch einen Formrahmen umfaßt. Nach Abdeckung der Fliesen durch eine Trennfolie und einer Matte aus Moosgummi werden die Fliesen durch einen zweiten Formteil pressend abgedeckt. Anschließend werden die beiden Formteile um eine horizontale Achse um 180° geschwenkt und über die nunmehr oben liegende Einfüllöffnung Fugenwerkstoff zwischen den Fliesen und den Fliesen und Formrahmen eingebracht. Das erforderliche Schwenken der Formteile erweist sich dabei als arbeitsaufwendig. Nach einem anderen Verfahren ist es bekannt, die Fliesen mit der Rückseite unmittelbar in einen Formunterteil einzulegen, die so eingelegten Fliesen durch eine Folie abzudecken und den Formunterteil durch einen Formoberteil zu verschließen. Auch dieses Verfahren erfordert ein Drehen beider Formteile vor dem Einbringen des Fugenwerkstoffs, was Wellen oder Achsen sowie bewegbare Fülleitungen zur Voraussetzung hat. Schließlich haben beide Verfahren den Nachteil gemeinsam, daß die Fliesen beim Umdrehen der Formteile oftmals unbeabsichtigte Verschiebebewegungen ausführen, was zu ungleichen Fugenbreiten Anlaß gibt.

Es ist Aufgabe der Erfindung, die Herstellung von Belagtafeln mit durch Fugenwerkstoff zusammengehaltenen Fliesen einfacher und sicherer zu machen.

Die Erfindung sieht hierzu vor, daß die Fliesen mit der Vorderseite mit Fugenabstand auf einen mit einer flexiblen oder elastischen Auflage übergriffenen Formunterteil frei aufgelegt und durch einen Formrahmen mit halber Fugenbreite umfaßt werden und daß an den Rückseiten der Fliesen und dem Formrahmen ein Formoberteil angelegt und fixiert wird, daß nachfolgend über eine im Formoberteil angeordnete Einfüllöffnung Fugenwerkstoff in die leeren Fugen zwischen den Fliesen sowie den Fliesen und dem Formrahmen eingebracht und nach Zurückschwenken des Formoberteils und Erhärtung oder Polymerisierung des Fugenwerkstoffs die Fliesentafel vom Formunterteil und dem Formrahmen abgehoben wird. Die Verfahrensschritte erfordern ein einfaches Ablegen der Fliesen und Anschwenken beider Formteile vor dem Einbringen des Fugenwerkstoffs und demgemäß vereinfachte Formteile. Außerdem sorgt der Fortfall der Schwenkungen von Formteilen dafür, daß unbeabsichtigte Verschiebungen der Fliesen unterbleiben. Es hat sich gezeigt, daß das Anschwenken des Formoberteils an den Fliesen genügend Freiraum zwischen Formoberteil und Fliesen zum exakten Füllen der Fugen gibt, wobei sich eine saubere ebene Rückseite an den Belagtafeln erzielen läßt. Als Fugenwerkstoff können beliebig auch geschäumte bzw. fließfähige polymerisierbare Kunststoffe zum Einsatz kommen.

In Fortbildung des Verfahrens ist vorgesehen, auf den Formunterteil zwischen diesem und den Vorderseiten der Fliesen eine Kunststoffolie aufzulegen. Es besteht auch die Möglichkeit, zwischen den Vorderseiten der Fliesen und dem Formunterteil eine Matte aus einem Gummiwerkstoff oder einem gummiartigen Kunststoff aufzulegen. Abgesehen davon, daß die Folien bzw. Matten ein Festsetzen des Fugenwerkstoffs am Formunterteil verhindern, führen sie beim Anschwenken des Formoberteils durch Nachgiebigkeit zu einem Toleranzausgleich.

Für die Durchführung des Verfahrens ergibt sich eine geeignete Vorrichtung einfach dadurch, daß der Formunterteil und der Formoberteil durch ein Scharniergelenk klappbeweglich miteinander verbunden sind.

Das Verfahren ist an einem Ausführungsbeispiel in der Zeichnung verdeutlicht. Hierin bedeuten:

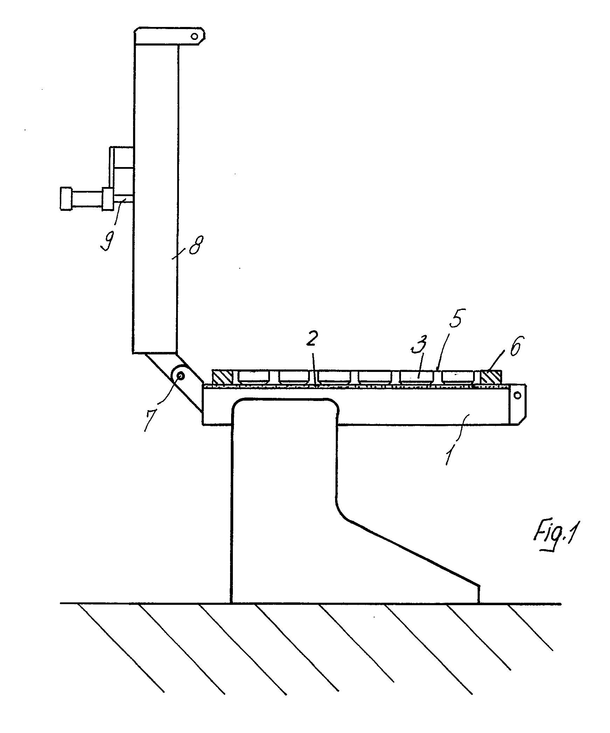

Fig. 1 eine Vorrichtung geöffnet, in Seitenansicht,

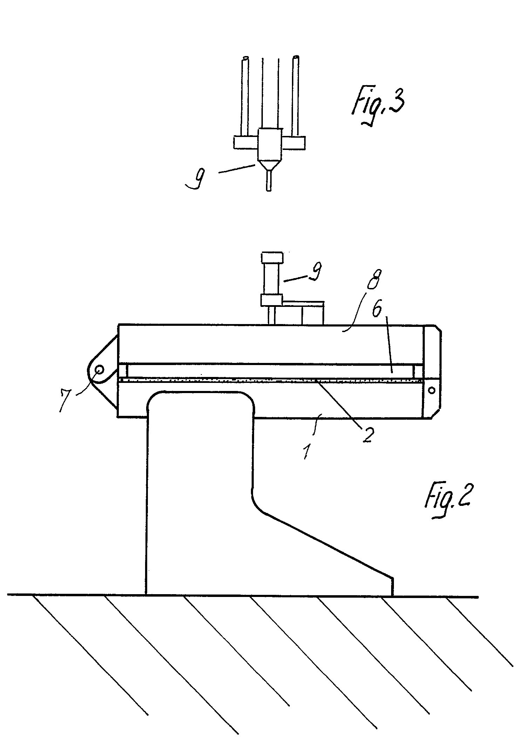

Fig. 2 eine Vorrichtung gemäß Fig. 1, geschlossen in Seitenansicht und

Fig. 3 einen Füllkopf für Fugenwerkstoffe in Seitenansicht.

In den Fig. ist mit 1 ein Formunterteil bezeichnet, der oben eben ausgebildet und durch eine Folie bzw. eine Matte 2 aus einem Kunststoff abgedeckt ist. Auf die Folie oder Matte 2 sind Fliesen 3 mit ihrer Vorderseite in fugenbreitem Abstand 5 aufgelegt. Die Fliesen 3 sind durch einen Formrahmen 6 umfaßt, dessen lichter Abstand zu den Fliesen 3 eine halbe Fugenbreite beträgt. Der Formunterteil 1 ist über ein Gelenk 7 mit einem Formoberteil 8 verbunden, der einen Füllkopf 9 trägt.

Nach dem Auflegen der Fliesen 3 auf der Matte 2 und Aufbringen des Formrahmens 6 werden der Formoberteil 8 um das Gelenk 7 an den Formunterteil 1 angeschwenkt und beide Formteile 1 und 8 miteinander fixiert. Nunmehr wird Fugenwerkstoff über den Füllkopf 9 in die Fugen einge-bracht.

**Ansprüche**

1. Verfahren zum Herstellen von Wand- und Bodenbelagtafeln mit einer Anzahl durch erhärteten oder polymerisierten Fugenwerkstoff zu einer einstückigen Einheit verbundenen Fliesen, dadurch gekennzeichnet, daß die Fliesen mit der Vorderseite mit Fugenabstand auf einen mit einer flexiblen oder elastischen Auflage übergriffenen ebenen Formunterteil frei aufgelegt und durch einen Formrahmen mit halber Fugenbreite umfaßt werden und daß an den Rückseiten der Fliesen und dem Formrahmen ein Formoberteil angelegt und fixiert wird, daß nachfolgend über eine im Formoberteil ausgebildete Einfüllöffnung Fugenwerkstoff in die leeren Fugen zwischen den Fliesen sowie den Fliesen und den Formrahmen eingebracht und nach Zurückschwenken des Formoberteils und Erhärtung oder Polymerisierung des Fugenwerkstoffs die Fliesentafel vom Formunterteil und den Formrahmen abgehoben wird.

2. Verfahren nach Anspruch 1, dadurch gekennzeichnet, daß auf den Formunterteil zwischen diesem und den Vorderseiten der Fliesen eine Kunststoffolie aufgelegt wird.

3. Verfahren nach Anspruch 1, dadurch gekennzeichnet, daß auf dem Formunterteil zwischen diesem und den Vorderseiten der Fliesen eine Matte aus einem Gummiwerkstoff oder einem gummiartigen Kunststoff aufgelegt wird.

4. Vorrichtung zur Durchführung des Verfahrens nach Anspruch 1, dadurch gekennzeichnet, daß der Formunterteil (1) und der Formoberteil (8) durch ein Schaniergelenk (7) klappbeweglich mit-einander verbunden sind.

Fig.1

EP 0 319 605 A1

Fig.3

Fig.2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-6 915 331 (F. MEDER) <br> * Figuren 1,2; Seiten 1-6; Ansprüche 1-6,8-10 * <br> --- | 1-3 | E 04 F 13/08 <br> E 04 F 15/08 |
| A | DE-A-2 803 389 (T. GAHMBERG et al.) <br> * Figuren 1-5; Seite 9, Absatz 1 * <br> --- | 1,3 | |
| D,Y | DE-A-2 519 284 (BÜSCHDORFER KUNSTSTOFFTECHNIK GMBH) <br> * Figuren 1-5; Ansprüche 1-3 * <br> --- | 1-3 | |
| Y | EP-A-0 145 675 (ONE TILE S.P.A) <br> * Figuren 1-3; Ansprüche 1-12,17; Seiten 4,5 * <br> --- | 1-3 | |
| .A | US-A-3 697 038 (E.S. STEBAKOV et al.) <br> * Figur 1; Zusammenfassung * <br> ----- | 4 | |

**RECHERCHIERTE SACHGEBIETE (Int. Cl.4)**

E 04 F 13/00
E 04 F 15/00

Der vorliegende Recherchenbericht wurde für alle Patentansprüche erstellt

| Recherchenort | Abschlußdatum der Recherche | Prüfer |
|---|---|---|
| BERLIN | 24-06-1988 | BOUSQUET K.C.E. |